# EUROPÄISCHE PATENTSCHRIFT

(11) **EP 1 055 440 B1**
(45) Veröffentlichungstag und Bekanntmachung des Hinweises auf die Patenterteilung: **11.03.2009**
(21) Anmeldenummer: 00110033.8
(22) Anmeldetag: 12.05.2000
(51) Int. Cl.: B01D 15/00, B01J 20/24, B01J 20/26, B01J 20/16, C02F 1/28, C02F 101/32

(54) **Verwendung eines Adsorptionsmittel aus pulverförmigem Kautschuk zur Adsorption von organischen Verbindungen**
Use of a pulverized rubber adsorbent for adsorbing organic compounds
Utilisation d'un adsorbant à base de caoutchouc pulvérulent pour l'adsorption de composés organiques

(30) Priorität: 27.05.1999 DE 19924367
(43) Veröffentlichungstag der Anmeldung: 29.11.2000
(73) Patentinhaber: Festel, Gunter, 6331 Hünenberg (CH)
(72) Erfinder: Ernst, Uwe, 45768 Marl (DE); Gerdau, Herbert, 45721 Haltern (DE); Karau, Andreas, Dr., 52134 Herzogenrath (DE); Kuge, Martin, Dr., 63477 Maintal (DE); Görl, Udo, Dr., 45657 Recklinghausen (DE); Stober, Reinhard, Dr., 63594 Hasselroth (DE)

(56) Entgegenhaltungen:
- EP-A- 0 261 687
- WO-A-91/05738
- WO-A-97/44406
- DE-A- 4 233 478
- US-A- 4 206 080
- US-A- 4 883 829
- US-A- 5 391 300
- DATABASE WPI Section Ch, Week 199846 Derwent Publications Ltd., London, GB; Class D15, AN 1998-540692 XP002149357 & RU 2 108 147 C (SHERSTNEV P P), 10. April 1998 (1998-04-10)
- PATENT ABSTRACTS OF JAPAN vol. 005, no. 067 (C-053), 7. Mai 1981 (1981-05-07) & JP 56 016580 A (MITSUBISHI RAYON CO LTD), 17. Februar 1981 (1981-02-17)
- DATABASE WPI Section Ch, Week 199840 Derwent Publications Ltd., London, GB; Class A12, AN 1998-465528 XP002149358 & RU 2 104 780 C (KUZNETSOV E N), 20. Februar 1998 (1998-02-20)

## Beschreibung

Die Erfindung betrifft die Verwendung eines pulverförmigen Kautschuks zur Adsorption von organischen Verbindungen aus einer wasserhaltigen Umgebung, bei dem man als Adsorptionsmittel pulverförmigen Kautschuk (Kautschukpulver, Pulverkautschuk) einsetzt, den man durch Ausfällen aus Füllstoff und Kautschuk enthaltenden Suspensionen oder -Lösungen gewinnt.

Zur Aufbereitung von Prozeßlösungen, zur Rückgewinnung von Wertstoffen aus Produktionslösungen sowie in der Abluft-und Abwasserbehandlung sind heute adsorptive Verfahren weit verbreitet. Da die Anforderungen an die Reinheit von Produktionslösungen, an die Rückgewinnung von Wertstoffen sowie die zulässigen Abluftemissionen und Abwasserbelastungen ständig steigen, ist eine permanente Weiter- und Neuentwicklung bestehender Adsorptionstechnologien notwendig.

Die Eignung der adsorptiven Verfahren wird von den Adsorbereigenschaften wie Selektivität, Adsorptionskapazität, Limitierung des Stofftransports und der Standzeit des Adsorbers bestimmt.

Heute werden zur Adsorption aus der wäßrigen Phase vornehmlich Adsorber auf Aktivkohle- oder Polymerbasis sowie anorganische Adsorbentien eingesetzt. Die Aktivkohle stellt ein hochporöses, aktives Kohlenstoffgerüst dar, welches hauptsächlich aus Kohlenstoff und geringen Mengen an chemisch gebundenem Sauerstoff und Wasserstoff besteht. Aktivkohle zeichnet sich durch sehr hohe spezifische Oberflächen aus, die im Bereich von 500 bis 1500 m² liegen. - Die Porenstruktur besteht hauptsächlich aus Mikro- und Makroporen, weshalb die Aktivkohle besonders gut Moleküle mit einem Molgewicht kleiner als 200 Da adsorbiert. Das spezifische Gesamtporenvolumen von Aktivkohle liegt im allgemeinen bei 1 - 1.5 ml/g.

Nachhaltig wirkt sich auf die Adsorptionsfähigkeit der Aktivkohle aus, daß ihre Oberfläche sich sehr hydrophil verhält.

Durch die Benetzung der Oberfläche mit Wasser wird die Adsorptionskapazität für organische unpolare Moleküle reduziert. Des weiteren ist die maximal mögliche Molekülgröße, die an Aktivkohle adsorbiert werden kann, aufgrund der Mikro- und Submikroporen limitiert. Als Alternative zur Aktivkohle stehen heutige makro- und mikroporöse Polymeradsorber zur Verfügung, die zum Beispiel aus Styrol-Divinyl-Copolymerisaten bestehen und spezifische Oberflächen zwischen 400 bis 1400 m²/g besitzen. Diese zeigen je nach Polymer und Oberflächenmodifikation ein hydrophobes oder hydrophiles Verhalten, die optimal zu adsorbierenden Molekülmassen liegen aber häufig unter 1000 Da.

Goerl U. et al.: "Rubber/Filler Batches in Powderform" Kautschuk & Gummi-Kunststoffe, DE, Dr. Alfred Huthig Verlag GmbH, Heidelberg, Bd. 51, Nr. 4, 1. April 1998 (1998-04-01), Seiten 250-252, 254-255 offenbart die Herstellung von füllstoffhaltigen Kautschukpulvern mit einem Gehalt von 40 - 1000 phr Füllstoff. Als Füllstoffe werden Ruße sowie mit Organo-Siliziumverbindungen behandelte gefällte Kieselsäure offenbart. Die füllstoffhaltigen Kautschukpulver finden beispielsweise als Reifengummi Anwendung.

Die DE-A-3723213 und die DE-A-3723214 offenbaren ein Verfahren zur Herstellung füllstoffhaltiger rieselfähiger Kautschukpulver, wobei als Füllstoffe im Wesentlichen Ruße verwendet werden. Diese Kautschukmischungen sollen vorwiegend in der Kunststoff- bzw. Gummindustrie, zum Beispiel als Reifenlaufstreifen und Dichtungsprofile, eingesetzt werden.

Das US 4,206,080 offenbart eine öladsorbierende Zusammensetzung, die zur Entfernung von öl aus ölkontaminiertem Wasser geeignet ist. Es wird eine granulierte Mischung eingesetzt, die 5 - 80 Gew.-% eines anorganischen Füllstoffs und 95 - 20 Ccw.-% eines vernetzten Polymers enthält. Die Herstellung der adsorbierenden Zusammensetzung ist jedoch relativ aufwändig und auch die Adsorptionskapazität gegenüber organischen Verbindungen aus einer wasserhaltigen Umgebung ist nicht ausreichend.

Die WO 81/05738 offenbart ebenfalls ein Verfahren zur Entfernung öliger Verunreinigungen aus Wasser, wobei dem verunreinigtem Wasser eine mit der Verunreinigung in Reaktion tretende Substanz zugesetzt, nach einer gewissen Reaktionszeit das entstandene Produkt gesammelt und entfernt wird. In dem Verfahren in dieser Druckschrift wird ein Gummmimahlgut mit einer Teilchengröße von < 5 mm eingesetzt. Jedoch ist auch hier die Aufnahmekapazität des Gummimahlguts begrenzt.

Aufgabe der Erfindung ist es, ein gut anwendbares und wirksames Adsorptionsmittel zur Verfügung zu stellen.

Die Lösung der Aufgabe ist in den Patentansprüch 1 bis 23 dargelegt.

Gegenstand der Erfindung ist die Verwendung von pulverförmigen Kautschuck als Adsorptionsmittel zur Adsorption von organischen Verbindungen, das dadurch gekennzeichnet ist, daß man pulverförmige Adasorptionsmittel einsetzt, die neben natürlichem und synthetischem Kautschuk einen fest mit der Kautschukmatrix verbundenen Füllstoffanteil besitzen.

Es handelt sich um einen neuen Typ von Adsorptionsmitteln, in denen der Kautschukanteil und einer oder mehrere Füllstoffe homogen verteilt vorliegen.

Während Aktivkohle und Polymeradsorber Moleküle nahezu auschließlich aufgrund ihrer hohen Oberfläche adsorptiv binden, liegen die Vorteile des erfindungsgemäß eingesetzten Kautschukpulvers in der Kombination aus Adsorptionseigenschaften, hervorgerufen durch die Struktur und die hohe Oberfläche der Füllstoffe und den Absorptionseigenschaften bedingt durch die lipophile Latexmatrix.

Weitere Vorteile bei der Verwendung dieses Materials gegenüber den bereits auf dem Markt existenten sind die hohen Kapazitäten und der hohe Anteil an Makroporen, der zum einen einen effizienten Stofftransport in den einzelnen Partikeln ermöglicht und gleichzeitig die Wahrscheinlichkeit für ein Verblocken der Porenstruktur durch die Adsorption höhermolekularer Substanzen oder durch Quellungsvorgänge reduziert. Des weiteren ist aufgrund der Hydrophobizität des Polymers die Benetzung des Adsorbers mit Wasser und damit die Koadsorption von Wasser reduziert.

Diese Problematik findet sich insbesondere bei der Adsorption von in Wasser suspendierten Ölen, seien es Schwer- oder Leichtöle.

Gegenstand der Erfindung ist die Verwendung eines Adsorptionsmittels für organische Verbindungen aus wasserhaltiger Umgebung, die aus einem pulverförmigen Kautschuk bestehen, der natürliche oder synthetische, organische oder anorganische Füllstoffe in einer Menge von 100 bis 5000, bevorzugt 100 bis 3000 phr einzeln oder gemeinsam, enthält.

Für die erfindungsgemäße Verwendung geeignet sind besonders Kautschukpulver, enthaltend einen oder mehrere oxidische(n) oder bevorzugt silikatische(n) Füllstoff(e), insbesondere eine gefällte oder pyrogene Kieselsäure in einer Menge 100 phr bis 5000 phr, wenn es sich um einen synthetischen Füllstoff dieser Art handelt, oder insbesondere in einer Menge von 100 phr bis 3000 phr, wenn es sich um einen natürlichen Füllstoff handelt, deren Oberfläche im allgemeinen mit einer oder mehreren Organosiliciumverbindungen der allgemeinen Formeln

[ R¹ₙ(RO)₃₋ₙ Si-(Alk)ₘ -(Ar)ₚ ] _{q} [B] (I) ,

R¹ₙ (RO)₃₋ₙ Si-(Alkyl) (II),

oder

R¹ₙ (RO)₃₋ₙ Si-(Alkenyl) (III)

modifiziert ist, in denen bedeuten
- B:: -SCN, -SH -Cl, NH₂ (wenn q = 1) oder -Sx- (wenn q = 2)
- R und R¹:: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können, bevorzugt eine Alkylgruppe,
- R:: eine C₁-C₄-Alkyl, C₁-C₄-Alkoxygruppe, verzweigt oder nicht verzweigt,
- n:: 0; 1 oder 2,
- Alk:: eine zweiwertigen geraden oder verzweigten Kohlenwasserstoffrest mit 1 bis 6 Kohlenstoffatomen,
- m:: 0 oder 1
- Ar:: einen Arylenrest mit 6 bis 12 C-Atomen
- p:: 0 oder 1 mit der Maßgabe, daß p, m und n nicht gleichzeitig 0 bedeuten,
- x:: eine Zahl von 2 bis 8,
- Alkyl:: einen einwertigen geraden oder verzweigten gesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen,

und/oder Ruße in einer Menge von 100 phr bis 5000 phr, wobei die Gesamtmenge der Füllstoffe einzeln oder gemeinsam 5000 phr nicht überschreitet.

Als Kautschuktypen geeignet haben sich folgende Spezies gezeigt, einzeln oder im Gemisch miteinander: Naturkautschuk, Emulsions-SBR mit einem Styrolanteil von 10 bis 50 %, Butyl-Acrylnitril-Kautschuk.

Butylkautschuke, Terpolymere aus Ethylen, Propylen (EPM) und nicht konjugierte Diene (EPDM), Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke, insbesondere 3,4-Polyisopren.

Neben den genannten Kautschuken kommen folgende Elastomere, einzeln oder im Gemisch, in Frage: Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenenfalls auch chemisch modifizierter Naturkautschuk, wie z. B. epoxidierte Typen.

Als Füllstoffe sind die aus der Kautschukverarbeitung bekannten Ruße, Pigmentruße, insbesondere aus Recyclingverfahren gewonnenes Gummimehl, Aktivkohle, weiße Füllstoffe synthetischer Natur, wie z. B. gefällte oder pyrogene Kieselsäuren, Zeolithe, Natriumaluminiumsilicate oder natürliche Füllstoffe, wie z.B. Kieselkreide, Clays, Gips oder Zement zu nennen, die einzeln oder in Kombination miteinander eingesetzt werden.

Geeignet sind ebenso die bei der thermischen Aufbereitung von Lackschlämmen anfallenden Pulver (Salemer^{®}).

Besonders geeignet sind Ruße, wie sie allgemein in der Kautschukverarbeitung oder als Pigmente eingesetzt werden, oder auch Ruße, deren Oberfläche durch oxidative Nachbehandlung modifiziert wurde.

Dazu gehören Furnaceruße, Gas- und Flammruße mit einer Jodadsorptionszahl 5 bis 1200 m²/g, insbesondere 25 bis 1075 m²/g. einer CTAB-Zahl von 15 bis 700 m²/g, einer DBP-Adsorption von 30 bis 400 ml/100 g und einer 24 M4 DBP-Zahl von 50 bis 400 ml/100 g in einer Menge von 50 bis 5000 Teilen, insbesondere 200 bis 2000 Teilen, auf 100 Teile Kautschuk.

Geeignet sind ebenso die aus dem Kautschuksektor bekannten gefällten Kieselsäuren sowie pyrogene Kieselsäuren.

Diese besitzen im allgemeinen eine nach der bekannten BET-Methode bestimmte N₂-Oberfläche von 35 bis 1100 m²/g, insbesondere 100 bis 1000 m²/g, eine CTAB-Oberfläche von 30 bis 500 m²/g, eine DBP-Zahl von 150 bis 400 ml/100g.
Das erfindungsgemäß eingesetzte Produkt enthält im allgemeinen diese Kieselsäuren in einer Menge von 50 bis 3000 Teilen, insbesondere 200 bis 2000 Teilen, bezogen auf 100 Teile Kautschuk.

Handelt es sich um Füllstoffe wie z.B. Gummimehl, Aktivkohle, Natriumaluminiumsilicate, Zeolithe oder weiße Naturfüllstoffe , wie Clays, Zement, Gips oder Kieselkreiden mit einer N₂-Oberfläche von 2 bis 35 m²/g setzt man diese in einer Menge von 50 bis 3000 Teilen, bezogen auf 100 Teile Kautschuk, ein.

Geeignet sind auch füllstoffhaltige Kautschukpulver, die Kieselsäuren, Gummimehl, Aktivkohle,
Natriumaluminiumsilicate, Zeolithe, Zement, Gips und Ruß nicht einzeln sondern im Gemisch enthalten.

Die Gesamtmenge an Füllstoff beläuft sich in diesem Fall auf 50 bis 5000 Teile Füllstoff pro 100 Teile Kautschuk.

Bevorzugt werden Füllstoffe mit einer hohen spezifischen Oberfläche eingesetzt. Besonders geeignet sind Ruße, die aufgrund ihrer hohen spezifischen Oberfläche hohe Adsorptionskapazitäten besitzen. Das Adsorptionsvermögen wird mit zunehmender Oberfläche und Struktur des Rußes verbessert. Durch oxidative Nachbehandlung läßt sich die Oberfläche mit sauerstoffhaltigen funktionellen Gruppen modifizieren und das Adsorptionsverhalten der Ruße beeinflussen. In Abhängigkeit von der Modifizierung der Oberflächen werden Lösungsmittel, Polymere etc. in unterschiedlichem Ausmaß adsorbiert. Die spezifische Oberfläche des Adsorbers läßt sich durch das Verhältnis von eingesetztem Füllstoff zu Polymer sowie die Eigenschaften des Füllstoffes (zum Beispiel Primärpartikeldurchmesser, Struktur des Füllstoffes) variieren. Der Füllstoffanteil im erfindungsgemäß eingesetzten Kautschukpulver liegt bevorzugt zwischen 40 bis 98 Gew.-%, insbesondere 66 bis 96 Gew.-%.

In Abhängigkeit vom Füllgrad des Kautschukpulvers sind in die Oberfläche Füllstoffteilchen mit eingebunden,so daß ein Verkleben der nach dem neuen Verfahren hergestellten Partikel auch unter Druck, wenn zum Beispiel mehrere Säcke aufeinanderliegen, nicht erfolgt.

Die erfindungsgemäß eingesetzten Adsorbentien, die aus füllstoffhaltigen, feinteiligen Kautschuken (Kautschukpulver) bestehen, werden durch Ausfällen aus wasserhaltigen Mischungen, die die Füllstoffe, bevorzugt silikatische Füllstoffe und/oder Ruße in Form von Suspensionen, eine wässrige Emulsion eines Kautschuks (Polymers) oder eine Kautschuklösung enthalten, durch Zusatz von wasserlöslichen Salzen eines Metalls, ausgewählt aus den Gruppen II a, II b, III a und VIII des periodischen Systems der Elemente, erhalten.

Das Verfahren ist dadurch gekennzeichnet, daß man
a) zunächst aus dem Füllstoff, insbesondere einer silikatischen Verbindung und/oder Rußen und Wasser eine Füllstoffsuspension mit einer Suspensionsdichte zwischen 0,5 - 10%, insbesondere zwischen 5 - 7 % bezogen auf den Feststoff unter Rühren herstellt, gegebenenfalls die Feststoffteilchen zuvor mittels eines geeigneten Mahlwerkes heruntermahlt (deagglomeriert), gegebenenfalls zusätzlich Wasserstoffbrücken-bildende Verbindungen wie Polyalkohole oder polyvalente Amine in Mengen von 0,5 - 10 Teilen, bezogen auf 100 Teile des Füllstoffs, zur Suspension hinzufügt, und gegebenenfalls die Suspension auf Temperaturen im Bereich zwischen 25 - 95 °C erwärmt,
b) anschließend, wenn die Suspension silikatische Füllstoffe enthält, eine oder mehrere Organosiliciumverbindung(en) gemäß den Formeln (I) bis (III), die mindestens eine Alkoxygruppe enthalten, in Wasser gelöst oder direkt oder gegebenenfalls in Anwesenheit einer oberflächenaktiven Substanz in Wasser emulgiert, mit der genannten wässrigen Suspension dieses Füllstoffs oder dessen Mischung mit einem Ruß bei einer Temperatur von 10 bis 60 °C, bevorzugt bei Raumtemperatur, unter Rühren vermischt,
c) diese so hergestellte Suspension mit dem Polymerlatex, der Polymeremulsion oder der Polymerlösung vermischt, den pH-Wert dieser Mischung mit einer Säure oder der wäßrigen Lösung eines der oben genannten Salze, insbesondere einer Lewissäure, auf einen pH-Wert von 7 bis 4, bevorzugt zwischen 6,5 bis 4,5 absenkt und den in der Mischung befindlichen Kautschuk zusammen mit den gegebenenfalls durch die genannten
   Organosiliciumverbindungen modifizierten Füllstoffen ausfällt.
d) das ausgefallene füllstoffhaltige Kautschukpulver mit an sich bekannten Maßnahmen abtrennt, gegebenenfalls säurefrei wäscht,
e) den so erhaltenen Füllstoff trocknet und gegebenenfalls granuliert.

Es ist auch möglich, Adsorptionsmittel dieser Art unter Verwendung von mit Organosiliciumverbindungen gemäß den Formeln (I) bis (III) vormodifizierten silikatischen Füllstoffen herzustellen, so daß Schritt b) des erwähnten Verfahrens entfällt.

Strebt man einen Füllstoffanteil im Bereich von 100 bis 500 phr an, wählt man bevorzugt ein zweistufiges Verfahren zur pH-Absenkung.

In der ersten Stufe wird dann im allgemeinen ein pH-Wert im Bereich von 5,5 bis 4,5, in der zweiten ein pH-Wert von ca. 3,2 eingestellt. Bei diesem Vorgehen setzt man auch den Füllstoff aufgeteilt auf die beiden pH-Stufen zu.

Als Füllstoffe setzt man die obengenannten Ruße bevorzugt in feinteiliger Form (fluffy) ein, die im allgemeinen einen mittleren Korngrößendurchmesser von 1 bis 9 µm, vorzugsweise 1 bis 8 µm aufweisen, bevor sie suspendiert sind.

Dies erleichtert die Dispersion, so daß man ohne hohen Energieaufwand zu wäßrigen Suspensionen mit Füllstoffpartikeln eines mittleren Teilchendurchmessers deutlich kleiner als 10 µm gelangt.
Die gefällte Kieselsäure kann vorteilhaft in Form eines salzfrei gewaschenen Filterkuchens eingesetzt werden.

Als Metallsalze kommen solche in Frage, die von Elementen der Gruppen IIa, IIb, IIIa und VIII des periodischen Systems der Elemente stammen. Diese Gruppeneinteilung entspricht der alten IUPAC-Empfehlung (siehe Periodisches System der Elemente, Verlag Chemie, Weinheim, 1985) Typische Vertreter sind Magnesiumchlorid, Zinksulfat, Aluminiumchlorid, Aluminiumsulfat, Eisenchlorid,
Eisensulfat, Kobaltnitrat und Nickelsulfat, wobei die Salze des Aluminiums bevorzugt sind. Besonders bevorzugt ist Aluminiumsulfat.

Die Salze werden in einer Menge von 0,1 bis 6,5 Gewichtsteilen pro 100 Gewichtsteile Kautschuk eingesetzt. Zur Einstellung des definierten pH-Wertes geeignete und gegebenenfalls eingesetzte Säuren sind in erster Linie Mineralsäuren, wie z. B. Schwefelsäure, Phosphorsäure und Salzsäure, wobei die Schwefelsäure besonders bevorzugt ist. Eingesetzt werden können aber auch Carbonsäuren, wie z. B. Ameisen- und Essigsäure.

Das ausgefällte Kautschukpulver wird vorteilhaft mit Hilfe einer Zentrifuge abgetrennt und dann auf einen Restwassergehalt von im allgemeinen ≤ 1 % getrocknet, insbesondere in einem Wirbelbettrockner.

Die so hergestellten Kautschukpulver enthalten im allgemeinen keine Mikroporen sondern vornehmlich Mesoporen (2 bis 30 nm) und Makroporen (> 30 nm). Die prozentuale Porenverteilung zwischen Meso- und Makro liegt im allgemeinen zwischen 1 : 2,5 bis 1 : 22.

Das Gesamtporenvolumen liegt dabei in Abhängigkeit vom eingesetzten Füllstoff im Bereich von 1.0 bis 4 ml/g, insbesondere 1.5 bis 3 ml/g. Der Korngrößenbereich erstreckt sich im allgemeinen von 0.4 bis 10 mm Durchmesser, insbesondere 1 bis 3 mm.

Bestehen die im Pulverkautschuk eingesetzten Rohmaterialien ausschließlich aus Ruß und Latex, lassen sie sich thermisch nahezu rückstandsfrei entsorgen. Dies ist als weiterer Vorteil gegenüber den aus dem Stand der Technik bekannten Ölbindern zu sehen.

Obwohl die spezifischen Oberflächen der Kautschukpulver in Abhängigkeit von den enthaltenen Füllstoffen niedriger als die der üblicherweise eingesetzten Aktivkohlen sind, findet man zum Beispiel bei der Adsorption von Verbindungen aus der wäßrigen Phase mit dem Kautschukpulver eine höhere Gleichgewichtskapazität.

Als besonders geeignet erweisen sich die Kautschukpulver für die Adsorption von unpolaren, schlecht wasserlöslichen organischen Verbindungen.

Der Einsatz der erfindungsgemäßen Adsorbentien empfiehlt sich insbesondere, wenn die Konzentrationen der Adsorptive in geringen bis mittleren Konzentrationen vorliegen, die Adsorptive eine schlechte Wasserlöslichkeit bzw. einen hohen Oktanol/Wasser-Verteilungskoeffizienten besitzen und eine hohe Reinheitsanforderung an das Filtrat gestellt wird.

Für diese Aufwendung besonders geeignet sind die erfindungsgemäßen Adsorptionsmittel mit einem Füllstoffgehalt von > 1000 bis 2000 phr.

Ein bedeutendes Problem stellt die Verunreinigung von Gewässern durch das bei Havarien von Schiffen austretende Öl dar.

Während auf hoher See Öl mit Ölfangschiffen aufgenommen werden kann, gibt es zum Schutz von Küstenregionen vor Ölunfällen kaum geeignete Techniken. Noch immer muß hingenommen werden, daß durch Ölteppiche Tausende von Seevögel verenden und erhebliche, zum Teil irreversible Schäden der Meeresfauna und -flora angerichtet werden. Eine Beseitigung des Öls erfolgt in der Regel erst dann, wenn der Schlamm den Strandbereich der Küste erreicht hat. Zur Beseitigung der Kontamination werden dann Entsorgungsunternehmen beauftragt, den Strand "abzuhobeln". Diese sehr aufwendige, zum Teil noch manuell durchgeführte Strandreinigung mit Schaufel und Eimer ist heute noch immer Stand der Technik.

Das Ölbindevermögen des Pulverkautschuks läßt sich insbesondere durch das Verhältnis von eingesetztem Ruß zu Polymer sowie durch die Eigenschaften des Rußes (Primärpartikeldurchmesser, Struktur) variieren. Durch die geeignete Wahl beider Komponenten läßt sich die Eignung des Ölbinders auf spezielle Anforderungen hin (zum Beispiel Adsorption Leicht- oder Schweröl) optimal anpassen. Aufgrund der oberflächenaktiven Eigenschaften von Ruß ist auch die die Adsorption niedermolekularer Substanzen möglich, was die Reinigungsleistung des Ölbinders im Hinblick auf einen möglichen Rest-CSB weiter erhöht.

Als besonders geeignet für die Aufnahme von auf dem Wasser aufschwimmenden Ölen (Öl in Phase) erweisen sich erfindungsgemäße Adsorptionsmittel mit einem Füllstoffgehalt von 100 bis 1000 phr, insbesondere 200 bis 800 phr.

Der verfahrenstechnische Einsatz dieses Ölbindemittels kann wie folgt erfolgen:
- Flächiges Abstreuen des Ölbinders bei Tankerhavarien durch Hubschrauber oder vermengt mit Wasser durch Wasserkanonen.
   Pulverkautschuk nimmt Öl von der Wasseroberfläche innerhalb kurzer Zeit auf und bindet es irreversibel. Aus dem Granulat entstehen großvolumige, gummiartige Aggregate, die sich leicht einsammeln lassen. Auch Öl aus Emulsionen kann mit Pulverkautschuk aufgenommen werden.
- Abtrennung von Kohlenwasserstoffen und Emulsionen durch Festbettsäulen.Bei einem Druckverlust zwischen 1 und 2 bar/m können mit Pulverkautschuk lineare Flußraten für Wasser von 20 bis 40 m/h erreicht werden. Das vom Öl befreite Wasser weist einen Restölgehalt von < 100 ppm auf.
- Aufnahme von Öl aus Gewässern durch Kissen, Schläuche und Saugbooms, die mit Ölbinder gefüllt sind. Neben dem flächigen Abstreuen und dem Einsatz von Separationscontainern ist es möglich, Pulverkautschuk in Textilien einzubinden und in Form von selbstsaugenden Ölsperren, Schläuchen und Kissen für die Reinigung von Gewässern einzusetzen.

Die Vorteile des erfindungsgemäß eingesetzten Pulverkautschuks gegenüber den auf dem Markt verfügbaren Ölbindemitteln wie zum Beispiel Polypropylen und Zellulose liegen in der hohen Oleophilie und den hohen Ölaufnahmekapazitäten (bis zu ca. 300 % des Eigengewichtes) die durch den hohen Anteil an Makroporen im Molekül bedingt ist. Diese Porenstruktur ermöglicht einen effizienten Strofftransport im Adsorbens, eine irreversible Bindung des Öls und eine hohe Standzeit. Darüber hinaus ist Pulverkautschuk für Fauna und Flora absolut unschädlich.

Aufgrund der Hydrophobizität des Polymers ist ferner die Benetzung des Ölbinders mit Wasser und somit eine mögliche Koadsorption sehr stark reduziert.

Das erfindungsgemäße Adsorptionsmittel nimmt Benzin in gleicher Weise wie Wachse auf. Somit können zum Beispiel aliphatische Kohlenwasserstoffe insbesondere mit 5 bis 35 Kohlenstoffatomen gebunden werden, das heißt Moleküle von etwa 70 bis 500 Da.

Dazu gehören auch die niedermolekularen Verbindungen mit 5 bis 8 Kohlenstoffatomen (Benzol, Toluol etc.).

### Beispiele

Die folgenden Beispiele zeigen das Adsorptionsverhalten für ausgewählte niedermolekulare Substanzen und Öl an den erfindungsgemäß eingesetzten Kautschukpulvern.

### Beispiel 1

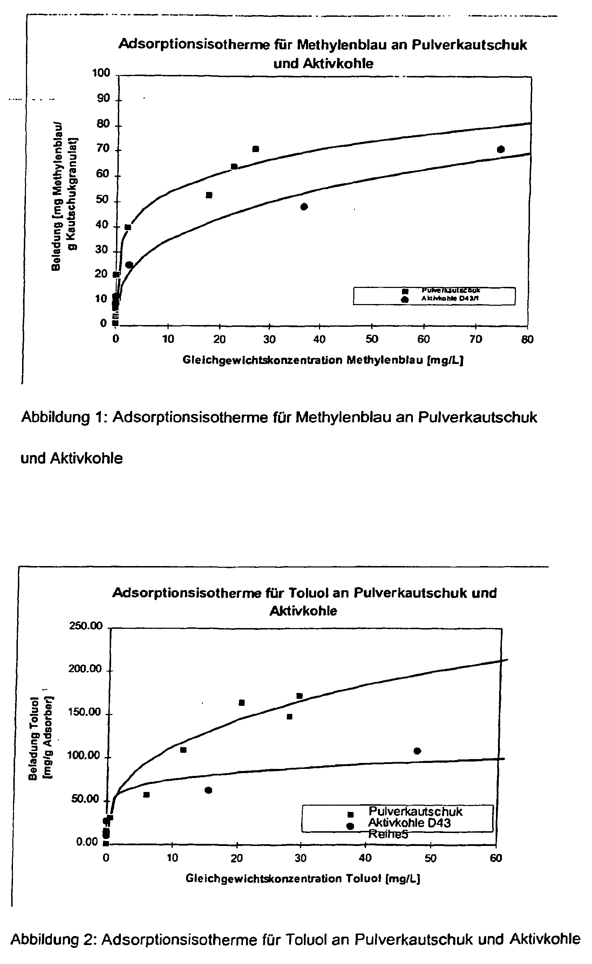

In Tabelle 1 ist die spezifische Oberfläche sowie Verteilung des Porenvolumens auf die verschiedenen Porenstrukturen für einen Adsorber auf Basis von Styrol-Polybutadien Kautschuk und einem niedrig strukturierten Ruß zusammengestellt. Materialien dieser Zusammensetzung enthalten keine Mikroporen, sondern besitzen vornehmlich Meso- und Makroporen. Die spezifische Oberfläche liegt mit 455 m²/g niedriger als bei den meisten Aktivkohlen. Die Abbildungen 1 und 2 zeigen die Adsorptionsisothermen für Methylenblau und Toluol an Pulverkautschuk im Vergleich zu einer kommerziell erhältlichen Aktivkohle (D43/1, Fa. Carbochem). Die erreichbaren Gleichgewichtskapazitäten liegen aus wäßrigen Lösungen für Toluol zwischen 150 und 200 mg/g und für Methylenblau bei ca. 80 mg/g Adsorber und sind deutlich höher als für konventionelle Aktivkohle. Weitergehende Untersuchungen haben gezeigt, daß sich dieses Material besonders zur Adsorption unpolarer, schlecht wasserlöslicher Stoffe eignet (vgl. Tabelle 2).

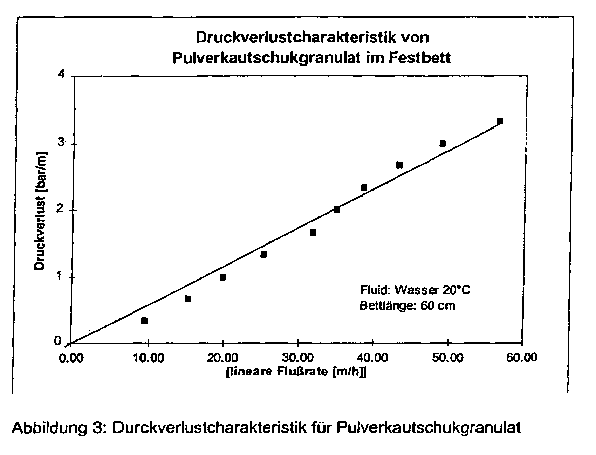

Der verfahrenstechnische Einsatz dieser Adsorber kann zum Beispiel in einer Festbettsäule erfolgen, welche von unten nach oben durchströmt wird. Die erreichbaren Flußraten als Funktion des Druckverlustes über die Säule ist in Abbildung 3 dargestellt. Bei Druckverlusten zwischen 1 und 2 bar/m lassen sich lineare Flußraten für Wasser von 20 bis 40 m/h in der Schüttung realisieren.

**Tabelle 1:**

| Zusammenstellung der Adsorberdaten | |
|---|---|
| Rußanteil [%] | 83 |
| spezifische Oberfläche [m²/g] | 455 |
| Mikroporen [ml/g] | keine |
| Mesoporen (2 - 30 nm) [ml/g] | 0,7 |
| Makroporen (> 30 nm)[ml/g] | 3,17 |
| Gesamtporenvolumen [ml/g] | 3,87 |

**Tabelle 2**

| Gleichgewichtskapazitäten für verschiedene Adsorptive aus der wäßrigen Phase | |
|---|---|
| Adsorptiv | Gleichgewichtskapazität bei 50 mg/l |
| Phenol | ca. 10 mg/g |
| Methylenblau | ca. 70 mg/g |
| Toluol | ca. 180 mg/g |

### Beispiel 2

Der Ölbinder Pulverkautschuk mit Ruß N339 und Füllgrad 500phr hat die folgenden Kenndaten zur Öladsorption:

| | |
|---|---|
| Schüttdichte: | 280 g/l |
| | |
| Ölaufnahmekapazität: | mit Druckbelastung |
| | 100 g Produkt binden 213 g Öl |
| | 100 ml Produkt binden 74 ml Öl |
| | |
| Ölaufnahmekapazität: | ohne Druckbelastung |
| | 100 g Produkt binden 276 g Öl |
| | 100 ml Produkt binden 96 ml Öl |
| | |
| Schwimmfähige Anteile: | ohne Öl: > 95 % |
| | mit Öl: > 95 % |

Ferner wurde das Ölhaltevermögen von Pulverkautschuk getestet. Pulverkautschuk setzt nach der Ölaufnahme auch bei Druckbelastung (Belastungszeit 2 Stunden) kein Öl mehr frei.

## Patentansprüche

1. Verwendung eines pulverförmigen Kautschuks als Adsorptionsmittel für organische Verbindungen aus einer wasserhaltigen Umgebung, wobei der pulverförmige Kautschuk durch Ausfällen aus Kautschuk und Füllstoff enthaltenden Suspensionen oder Lösungen erhalten wird.

2. Verwendung gemäß Anspruch 1, wobei der pulverförmige Kautschuk natürliche oder synthetische, organische oder anorganische Füllstoffe enthält.

3. Verwendung gemäß Anspruch 2, wobei einer der genannten Füllstoffe, einzeln oder gemeinsam im Bereich von 100 bis 5000 phr eingesetzt wird.

4. Verwendung gemäß den Ansprüchen 1 bis 3, wobei einer oder mehrere oxidische oder silikatische Füllstoffe, insbesondere eine gefällte oder pyrogenen Kieselsäure, in einer Menge von 100 phr bis 5000 phr, wenn es sich um einen synthetischen Füllstoff dieser Art handelt, oder in einer Menge von > 100 phr bis 5000 phr, wenn es sich um einen natürlichen Füllstoff dieser Art handelt, eingesetzt wird, deren Oberfläche im allgemeinen mit einer oder mehreren Organosiliciumverbindungen der allgemeinen Formeln
[R¹ₙ(RO)₃₋ₙSi-(Alk)ₘ-(Ar)ₚ]_{q} [B] (I),
R¹ₙ(RO)₃₋ₙSi-(Alkyl) (II),
oder
R¹ₙ(RO)₃₋ₙSi-(Alkenyl) (III)
modifiziert ist,
in denen bedeuten
B: -SCN, -SH -Cl, NH2 (wenn q = 1) oder -Sx- (wenn q = 2) R und R¹: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können, bevorzugt eine Alkylgruppe,
R: eine C₁-C₄-Alkyl, C₁-C₄-Alkoxygruppe, verzweigt oder nicht verzweigt,
n: 0; 1 oder 2,
Alk: eine zweiwertigen geraden oder verzweigten Kohlenwasserstoffrest mit 1 bis 6 Kohlenstoffatomen,
m: 0 oder 1
Ar: einen Arylenrest mit 6 bis 12 C-Atomen
p: 0 oder 1 mit der Maßgabe, dass p, m und n nicht gleichzeitig 0 bedeuten,
x: eine Zahl von 2 bis 8,
Alkyl: einen einwertigen geraden oder verzweigten gesättigten Kohlenwasserstoffrest mit 1 bis 20 Kohlenstoffatomen, bevorzugt 2 bis 8 Kohlenstoffatomen, Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen, und/oder insbesondere Ruße in einer Menge von 100 phr bis 5000 phr enthält, wobei die Gesamtmenge der Füllstoffe einzeln oder gemeinsam 5000 phr nicht überschreitet, und der Füllstoffanteil fest mit der Kautschukmatrix verbunden ist.

5. Verwendung gemäß einem der Ansprüche 1 bis 4, wobei das Adsorptionsmittel für in Wasser emulgierte, gelöste oder aufschwimmende organische Verbindungen eingesetzt wird.

6. Verwendung gemäß Anspruch 1, **dadurch gekennzeichnet, dass** der Kautschukanteil aus SBR-Kautschuk besteht.

7. Verwendung gemäß Anspruch 1, **dadurch gekennzeichnet, dass** als Füllstoff Ruß in einer Menge von 100 bis 2000 phr, oder Gummimehl in einer Menge von 100 bis 3000 phr, oder Natriumaluminiumsilikate in einer Menge von 100 bis 3000 phr, oder Zeolithe in einer Menge von 100 bis 3000 phr eingesetzt werden.

8. Verwendung gemäß den Ansprüchen 1 bis 7, **dadurch gekennzeichnet, dass** Mischungen der genannten Füllstoffe in einer Gesamtmenge von 100 bis 5000 phr eingesetzt werden.

9. Verwendung gemäß Anspruch 1, wobei das Adsorptionsmittel eine Korngrößenverteilung von 0,4 bis 10 mm und ein Gesamtporenvolumen von 1,0 bis 4 ml/g aufweist.

10. Verwendung gemäß einem der Ansprüche 1 bis 9, wobei das Kautschukpulver durch Ausfällen aus wasserhaltigen Mischungen, die die Füllstoffen und eine wassrige Emulsion eines Kautschuks oder eine Kautschuklösung enthalten, durch Zusatz von wasserlöslichen Salzen eines Metalls erhalten wird.

11. Verwendung nach Anspruch 10, wobei das eingesetzte Metall ausgewählt ist aus den Gruppen IIa, IIb, IIIa und IV des periodischen Systems der Elemente.

12. Verwendung gemäß einem der Ansprüche 1 bis 11, wobei man das Adsorbens anschließend abtrennt.

13. Verwendung gemäß Anspruch 12, **dadurch gekennzeichnet, dass** man Leicht- oder Schweröle an dem Kautschukpulver adsorbiert und das Adsorbens anschließend abtrennt.

14. Verwendung gemäß Anspruch 12, **dadurch gekennzeichnet, dass** man zur Adsorption von auf dem Wasser aufschwimmenden Leicht- oder Schwerölen (Öl in Phase) Kautschukpulver mit einem Füllstoffgehalt von 100 bis 1000 phr, insbesondere 200 bis 800 phr, einsetzt.

15. Verwendung gemäß Anspruch 12, **dadurch gekennzeichnet, dass** man zur Adsorption in Wasser gelöster organischer Verbindungen Kautschukpulver mit einem Füllstoffgehalt von > 1000 bis 2000 phr einsetzt.

16. Verwendung gemäß Anspruch 12, **dadurch gekennzeichnet, dass** man unpolare, schlecht lösliche oder nicht wasserlösliche Stoffe an dem Kautschukpulver adsorbiert und das Adsorbens anschließend abtrennt.

17. Verwendung gemäß Anspruch 12, **dadurch gekennzeichnet, dass** man das Adsorptionsmittel in einer Festbettsäule, einem Suspensionsreaktor oder Wirbelschichtreaktor einsetzt.

18. Verwendung gemäß Anspruch 12, **dadurch gekennzeichnet, dass** man das Adsorptionmittel auf Oberflächen von Gewässern abstreut, die mit organischen Verbindungen kontaminiert sind, und das Adsorbens anschließend abtrennt.

19. Verwendung gemäß Anspruch 12, **dadurch gekennzeichnet, dass** man das Adsorptionsmittel in Kissen, Schläuche und Saugbooms einsetzt.

## Claims

1. Use of a powdered rubber for adsorption of organic compounds from an aqueous environment, whereby the powdered rubber will be obtained by precipitation from suspensions or solutions containing filler and rubber.

2. Use according to claim 1, whereby the powdered rubber contains natural or synthetic, organic or anorganic fillers.

3. Use according to claim 2, whereby the said fillers will be used alone or in combination within the range from 100 to 5000 phr.

4. Use according to claims 1 to 3, whereby one or more oxidised or siliceous fillers are used, especially a precipitated or pyrogene silicic acid, in an amount from 100 phr to 5000 phr, if it is a synthetic filler of this type, or in an amount from > 100 phr to 5000 phr, if it is a natural filler of this type, whose surface is modified in general with one or more organosilicon compounds of the general formulas
[R¹ₙ(RO)₃₋ₙSi-(Alk)ₘ-(Ar)ₚ]_{q} [B] (I),
R¹ₙ(RO)₃₋ₙSi-(Alkyl) (II),
or
R¹ₙ(RO)₃₋ₙSi-(Alkenyl) (III)
in which
B is -SCN, -SH -Cl, NH2 (if q = 1) or -Sx- (if q = 2) R and R¹ are each an alkyl group containing 1 to 4 carbon atoms, branched or not branched, the phenyl radical, whereby it being possible for all radicals R und R¹ in each case to have the same or a different definition, preferably an alkyl group,
R is a C₁-C₄-Alkyl, C₁-C₄-Alkoxy group, branched or not branched,
n is 0; 1 or 2,
Alk is a bivalent straight or branched hydrocarbon radical with 1 to 6 carbon atoms,
m represents: 0 or 1
Ar is an arylen radical with 6 to 12 C atoms
p is 0 or 1 with the stipulation that p, m and n are not simultaneously 0,
x is a number from 2 to 8,
Alkyl is a monovalent straight or branched saturated hydrocarbon radical with 1 to 20 carbon atoms, preferably 2 to 8 carbon atoms,
Alkenyl is a monovalent straight or branched unsaturated hydrocarbon radical with 2 to 20 carbon atoms, preferably 2 to 8 carbon atoms, and/or contain particularly carbon black in an amount of 100 phr to 5000 phr, whereby the total amount of fillers, alone or in combination does not exceed 5000 phr, and the filler content is firmly attached to the rubber matrix.

5. Use according to claims 1 to 4, whereby the adsorbent is used for organic compounds emulsified, dissolved or floating in water.

6. Use according to claim 1, **characterised in that** the rubber content consists of SBR rubber

7. Use according to claim 1, **characterised in that** as filler, carbon black is used in an amount from 100 to 2000 phr, or rubber flour in an amount from 100 to 3000 phr, or sodium aluminium silicate in an amount from 100 to 3000 phr, or zeolites in an amount from 100 to 3000 phr.

8. Use according to claims 1 to 7, **characterised in that** the mixtures of the said fillers are used in a total amount from 100 to 5000 phr.

9. Use according to claim 1, whereby the adsorbent having a corn size distribution of 0.4 to 10 mm and a total pore volume of 1.0 to 4 ml/g.

10. Use according to claims 1 to 9, whereby the rubber powder by precipitation from a water-containing mixture, which contains the fillers and an aqueous emulsion of a rubber or a rubber solution, is obtained by adding water-soluble salts of a metal.

11. Use according to claim 10, whereby the used metal is selected from the groups IIa, IIb, IIIa and IV of the periodic table.

12. Use according to claims 1 to 11, whereby the adsorbent is subsequently separated.

13. Use according to claim 12, **characterised in that** light or heavy oils on the rubber powder are adsorbed and the adsorbent is subsequently separated.

14. Use according to claim 12, **characterised in that** rubber powder with a filler content from 100 to 1000 phr, in particular 200 to 800 phr is used for the adsorption of on the water floating light or heavy oils (oil in phase).

15. Use according to claim 12, **characterised in that** rubber powder with a filler content from > 1000 to 2000 phr is used for the adsorption of organic compounds dissolved in water.

16. Use according to claim 12, **characterised in that** nonpolar, poorly soluble or water-insoluble substances on the rubber powder are adsorbed and the adsorbent is subsequently separated.

17. Use according to claim 12, **characterised in that** the adsorbent is used in a packed bed column, a suspension reactor or fluidised bed reactor.

18. Use according to claim 12, **characterised in that** the adsorbent is sprinkled on the surface of bodies of water, which are contaminated with organic compounds, and the adsorbent is subsequently separated.

19. Use according to claim 12, **characterised in that** the adsorbent is used in pads, tubes and booms.

## Revendications

1. Utilisation d'un caoutchouc en poudre comme adsorbant destiné à enlever des composés organiques d'un milieu aqueux, ledit caoutchouc en poudre étant obtenu par précipitation à partir de suspensions ou solutions contenant du caoutchouc et des charges.

2. Utilisation selon la revendication 1, le caoutchouc en poudre contenant des charges naturelles ou synthétiques de nature organique ou inorganique.

3. Utilisation selon la revendication 2, l'une desdites charges étant mise en oeuvre, seule ou en combinaison, dans une fourchette comprise entre 100 et 5000 pce.

4. Utilisation selon les revendications 1 à 3, une ou plusieurs charges de type oxyde ou silicate, notamment de type silice précipitée ou pyrogénée, étant mises en oeuvre dans une quantité comprise entre 100 pce et 5000 pce lorsqu'il s'agit d'une telle charge d'origine synthétique ou dans une quantité comprise entre > 100 pce et 5000 pce lorsqu'il d'une telle charge d'origine naturelle, leur surface étant généralement modifiée avec un ou plusieurs composés organosiliciques répondant aux formules générales
[R¹ₙ(RO)₃₋ₙSi-(Alk)ₘ-(Ar)ₚ]_{q} [B] (I),
R¹ₙ(RO)₃₋ₙSi-(Alkyle) (II),
ou
R¹ₙ(RO)₃₋ₙSi-(Alkényle) (III)
dans lesquelles
B : -SCN, -SH -C1, NH2 (si q = 1) ou -Sx- (si q = 2)
R et R¹: un groupe alkyle ramifié ou non ramifié qui renferme 1 à 4 atomes de carbone, une radical phényle, les radicaux R et R¹ pouvant avoir dans leur ensemble des significations identiques ou différentes, s'agissant préférentiellement de groupes alkyle,
R : un groupe C₁-C₄-alkyle, C₁-C₄-alkoxy, ramifié ou non ramifié,
n : 0 ; 1 ou 2,
Alk : un radical hydrocarboné divalent, linéaire ou ramifié, qui renferme 1 à 6 atomes de carbone,
m : 0 ou 1
Ar : un radical arylène renfermant 6 à 12 atomes de carbone p : 0 ou 1, à condition que p, m et n ne prennent pas simultanément la valeur 0,
x : un nombre compris entre 2 et 8,
Alkyle : un radical hydrocarboné monovalent saturé, de structure linéaire ou ramifié, qui renferme 1 à 20 atomes de carbone, de préférence 2 à 8 atomes de carbone, Alkényle : un radical hydrocarboné monovalent insaturé, de structure linéaire ou ramifié, qui renferme 2 à 20 atomes de carbone, de préférence 2 à 8 atomes de carbone, et/ou notamment des noirs de carbone dans une quantité comprise entre 100 pce et 5000 pce, la quantité totale des charges, mises en oeuvre seule ou en combinaison, ne dépassant pas les 5000 pce et les charges étant solidement fixées dans la matrice de caoutchouc.

5. Utilisation selon l'une des revendications 1 à 4, l'adsorbant étant destiné à des composés organiques contenus dans l'eau sous forme d'une émulsion, sous forme d'une solution ou flottant sur l'eau.

6. Utilisation selon la revendication 1, **caractérisée en ce que** la partie caoutchouc est constituée de caoutchouc de type SBR.

7. Utilisation selon la revendication 1, **caractérisée en ce que** les charges mises en oeuvre sont constituées de noir de carbone dans une quantité comprise entre 100 et 2000 pce ou de caoutchouc broyé dans une quantité comprise entre 100 et 3000 pce ou de silicates de sodium-aluminium dans quantité comprise entre 100 et 3000 pce ou de des zéolithes dans une quantité comprise entre 100 et 3000 pce.

8. Utilisation selon les revendications 1 à 7, **caractérisée en ce qu'**on met en oeuvre des mélanges desdites charges dans une quantité totale comprise entre 100 et 5000 pce.

9. Utilisation selon la revendication 1, l'adsorbant présentant une granulométrie comprise entre 0,4 et 10 mm et un volume poreux total compris entre 1,0 et 4 ml/g.

10. Utilisation selon l'une des revendications 1 à 9, le caoutchouc en poudre étant obtenu par précipitation à partir de mélanges aqueux contenant les charges ainsi qu'une émulsion aqueuse d'un caoutchouc ou une solution de caoutchouc, la précipitation étant effectuée en ajoutant des sels hydrosolubles d'un métal.

11. Utilisation selon la revendication 10, le métal mis en oeuvre étant choisi dans les groupes IIa, IIb, IIIa et IV du tableau périodique des éléments.

12. Utilisation selon l'une des revendications 1 à 11, l'adsorbant étant ultérieurement enlevé par séparation.

13. Utilisation selon la revendication 12, **caractérisée en ce que** le caoutchouc en poudre sert à adsorber des huiles légères et lourdes et que l'adsorbant est ultérieurement enlevé par séparation.

14. Utilisation selon la revendication 12, **caractérisée en ce qu'**on met en oeuvre du caoutchouc en poudre présentant une teneur en charges comprise entre 100 et 1000 pce, notamment entre 200 et 800 pce, pour adsorber des huiles légères et lourdes flottant sur l'eau (phase huileuse).

15. Utilisation selon la revendication 12, **caractérisée en ce qu'**on met en oeuvre du caoutchouc en poudre présentant une teneur en charges comprise entre 1000 et 2000 pce pour adsorber des composés organiques dissous dans l'eau.

16. Utilisation selon la revendication 12, **caractérisée en ce que** le caoutchouc en poudre sert à adsorber des matières peu solubles ou insolubles dans l'eau et que l'adsorbant est ultérieurement enlevé par séparation.

17. Utilisation selon la revendication 12, **caractérisée en ce que** l'adsorbant est mis en oeuvre dans une colonne à lit fixe, un réacteur maintenant les réactants en suspension ou un réacteur à lit fluidisé.

18. Utilisation selon la revendication 12, **caractérisée en ce que** l'adsorbant est répandu sur la surface de plans d'eau contaminés par des composés organiques et que l'on enlève l'adsorbant ultérieurement par séparation.

19. Utilisation selon la revendication 12, **caractérisée en ce que** l'adsorbant est mis en oeuvre dans des coussins, des tuyaux ou des potences d'aspiration.
